# EUROPÄISCHE PATENTSCHRIFT

(11) **EP 0 725 267 B1**
(45) Veröffentlichungstag und Bekanntmachung des Hinweises auf die Patenterteilung: **18.11.1998**
(21) Anmeldenummer: 96101332.3
(22) Anmeldetag: 31.01.1996
(51) Int. Cl.: G01N 1/00, B01L 3/02

(54) **Elektrisch steuerbare Mikro-Pipette**
Electrically controlled micro-pipette
Micro-pipette actionnée électriquement

(30) Priorität: 01.02.1995 DE 19503141
(43) Veröffentlichungstag der Anmeldung: 07.08.1996
(73) Patentinhaber: Forschungszentrum Rossendorf e.V., 01474 Schönfeld-Weissig (DE)
(72) Erfinder: Howitz, Steffen, Dr., D-01309 Dresden (DE); Bürger, Mario, D-01796 Pirna (DE); Wegener, Thomas, D-16816 Neuruppin (DE)

(56) Entgegenhaltungen:
- EP-A- 0 545 284
- WO-A-94/05414
- DE-A- 3 531 241
- GB-A- 2 211 111
- SENSORS AND ACTUATORS B, Bd. B15, Nr. 1/03, 1.August 1993, Seiten 211-213, XP000411338 SCHOOT VAN DER B H ET AL: "MODULAR SETUP FOR A MINIATURIZED CHEMICAL ANALYSIS SYSTEM"
- ANALYTICAL CHEMISTRY, Bd. 66, Nr. 14, 15.Juli 1994, COLUMBUS US, Seiten 2318-2329, XP002008401 H.A. FISHMAN ET AL: "Spontaneous injection in microcolumn separations"

## Beschreibung

Die Erfindung betrifft eine elektrisch steuerbare Mikro-Pipette zur Handhabung kleinster Fluidvolumina im Bereich von einigen hundert pl bis zu einigen µl. Diese können reine Stoffe, Stoffgemische sowie in Flüssigkeiten suspensierte Mikropartikel sein, die in der chemischen Analytik, der Medizintechnik und der Biotechnologie einer gezielten Weiterverarbeitung zugeführt werden sollen. Die Mikro-Pipette ermöglicht die Aufnahme von Fluiden, Fluidgemischen oder den gegebenenfalls in ihnen enthaltenen Mikropartikeln, deren Abtransport in das Innere komplexer Systeme sowie die zielgerichtete Abgabe der aufgenommenen Stoffe an den Ort einer Probeweiterverarbeitung bzw. eines Probeabfalls.
In vielen Bereichen der chemischen Analysentechnik sowie in einer Reihe von Einsatzgebieten der biotechnologischen Präzisionstechnik ist die Dosierung, d.h. Mikropipettierung, kleinster Flüssigkeitsvolumina bzw. Suspensionen, eine relevante Problemstellung.
Bekannte Vorrichtungen zur Mikropipettierung gehen generell vom Einsatz mechanisch bewegter Kolben aus, deren Kolbenstange entsprechend fein stellbar ist. Bekannte technische Lösungen reichen von manuellen-, mechanischen- bis hin zu pneumatischen Stellgliedern. Präzise manuelle Stellglieder basieren auf dem Einsatz von Mikrometerschraubenantrieben (Katalog Coole Palmer, 1994). Pneumatische Feinstellglieder (Produktkatalog, ECET-Eppendorf-Cell-Technologie, 1994) werden zum Ansaugen und Abspritzen der Probeflüssigkeit genutzt. Die Stellbereiche liegen je nach Antriebssystem im Nanoliter bis Mikroliterbereich, realisierbare Inkremente betragen je nach dem Kompliziertheitsgrad der Stellglieder einige hundert Pikoliter bis zu wenigen Nanolitern. DE-OS 35 31 241 beschreibt eine Vorrichtung, die sowohl zur gesteuerten Ausgabe von Flüssigkeiten im µl-Bereich als auch zur Injektion von Flüssigkeiten im nl- bis zum pl-Bereich geeignet ist. Im letztgenannten Fall handelt es sich um eine Vorrichtung zur Perforation und Injektion von lebenden Zellen, wie sie in der Patch-Clamp-Technologie eingesetzt wird. Die technische Lösung betrifft eine Apparatur, die aus den Komponenten Schrittmotor, Kolben, Drucksensor und Injetionsspitze besteht. Diese Einrichtung ist im Freistrahlbetrieb für den pl-Bereich nicht einsetzbar.
Es ist auch eine Modulkonzeption bekannt, die neben den im Stapelaufbau arrangierten Chemosensoren ein komplexes Mikro-Kanalsystem und eine piezoelektrisch getriebene Membranpumpe enthält ( B. van der Schoot et al, Modular Setup for a Miniaturized Chemical Ananlysis System, Sensors and Actuators B, Bd. B 15, Nr. 1/03, 1993, 211-213). Diese als Mikropumpe ausgebildete Membranpumpe ist nicht feinstrahlfähig.
EP 0545 284 beschreibt eine Probenmeßvorrichtung zur optischen Vermessung biologischer Substanzen. Diese Vorrichtung besteht aus einem mikrofluidischem Kanal mit direkt integrierten Meßstellen und einer Injektionsöffnung am Kanalende sowie einem mikrofluidischem Antriebselement. Die dort eingesetzten Antriebselemente sind für die Pipettierung von Volumina unterhalb 1 µl nicht geeignet.
Die höchste Präzision wird gegenwärtig erreicht, wenn die mechanisch exzellent gelagerte Pumpkolbenstange durch eine elektromechanische Stellvorrichtung angetrieben wird und dieser Antrieb direkt über Hochpräzisions-Schrittmotoren vorgenommen wird. Die Firma ABIMED setzt dieses Prinzip an kommerziellen HPLC-Analysatoren ein. Dosiervorrichtungen, die das Dosieren im Pikoliterbereich gewährleisten müssen, sind z.B. mit einem piezoelektrischen Schrittmotor zur Auslenkung des Pumpkolbens ausgerüstet, welche Schrittweiten-Inkremente im Bereich von 130 bis 250 Nanometer ermöglichen. Die Kleinheit dieser Inkremente gestattet, daß minimale Volumenquanten im Pikoliterbereich, bei direktem Kontakt von Dosier- und Zielfluid übergeben werden können, der direkte Kontakt beider Fluide ist aber in jedem Fall Voraussetzung.
Über eine neue Methode zur Aufnahme kleinster Fluidvolumina im Piko- bis Femtoliterbereich in Mikrokapillaren berichten Fishman u.a. in [Anal. Chem. 1994,66,2318-2329]. Grundsätzlich ist auch bei diesem Verfahren der direkte Kontakt zwischen Dosierfluid und Zielfluid zwingende Voraussetztung für die Fluidübergabe. Das von Fishman als "spontane Injektion" bezeichnete Pipettierverfahren in Mikrokapillaren, nutzt die an gekrümmten Grenzflächen auftretende Druckdifferenz zur Aufnahme kleinster Fluidvolumina aus. Dabei wird eine Glaskapillare zur Probeinjektion verwendet, die aber selbst kein aktives fluidisches Element darstellt. Es ist nicht möglich, kleinste Fluidmengen aufzunehmen und abzugeben, ohne die Kapillare zu leeren. Ein weiterer Nachteil der passiven Mikrokapillare nach Fishman wird deutlich, wenn man ein System aus mehreren Mikrokapillaren z.B. bei der Vielkanalanalyse oder in Multidispensersystemen einsetzen würde. Dies ginge nur unter Verwendung zusätzlicher Mikroventile, und genau diese existieren bis heute nicht in der benötigten Kleinheit und Qualität.
Mit der Erfindung soll eine multifunktionale, kompakt aufgebaute und kostengünstig herstellbare Mikropipette geschaffen werden, die für die Pipettierung flüssiger Proben, einschließlich Suspensionen für das Fluidhandling im Volumenbereich von einigen Pikolitern bis zu einigen hundert Mikrolitern geeignet ist, ein geringstes Totvolumen sowie einen geringen Medienverbrauch aufweist, und auch für Vielkanaldispenser keine komplizierten mechanischen Stellglieder und Ventile benötigt.

Dies wird mit der erfindungsgemäßen, in den Patentansprüchen dargestellten elektrisch ansteuerbaren Mikro-Pipette gelöst. Diese Mikro-Pipette wird mittels der Technologien der Mikrosystemtechnik hergestellt. Sie kann als Hybridaufbau aus mehreren Einzelchips zum System Mikro-Pipette integriert werden, oder auch kompakt in nur einen Silizium-Chip integriert sein. Somit sind sehr einfach Vielkanaldispenser mit einer beliebigen Anzahl einzeln, in Gruppen oder komplett ansteuerbaren Fluidkanälen herstellbar. Grundsätzlich eignen sich beide Fertigungsalternativen für die Massenproduktion und zeichnen sich durch extrem hohe Genauigkeit und Reproduzierbarkeit aus. Der Einsatz der erfindungsgemäßen Mikro-Pipette führt je nach Anwendung zu einer Verringerung des Totvolumens bzw. des Medienverbrauchs. Aufgrund des Fehlens mechanisch bewegter Teile weist sie eine extrem hohe Zuverlässigkeit und wartungsfreie Standzeit auf. Ein Kontakt zwischen Dosier- und Zielfluid ist zum Zwecke der Übergabe nicht erforderlich.

Nachfolgend wird die Erfindung anhand einzelner Ausführungsbeispiele näher erläutert. Die zugehörige Zeichnung zeigt in
- Fig. 1:: die schematische Ansicht einer Mikro-Pipette bei der Probeaufnahme (a) sowie bei der Probeabgabe (b) einschließlich Steuerspannungsdiagramm
- Fig. 2:: den Schnitt durch eine Mikro-Pipette entsprechend Fig. 1
- Fig. 3:: die schematische Ansicht der Mikro-Pipette mit zusätzlicher Mikromembranpumpe bei der Probeaufnahme (a) sowie bei der Probeabgabe (b)
- Fig. 4:: die schematische Ansicht der Mikro-Pipette mit zusätzlicher Mikromembranpumpe beim Spülen der Pipette
- Fig. 5:: den Schnitt durch eine Mikro-Pipette entsprechend Fig. 4

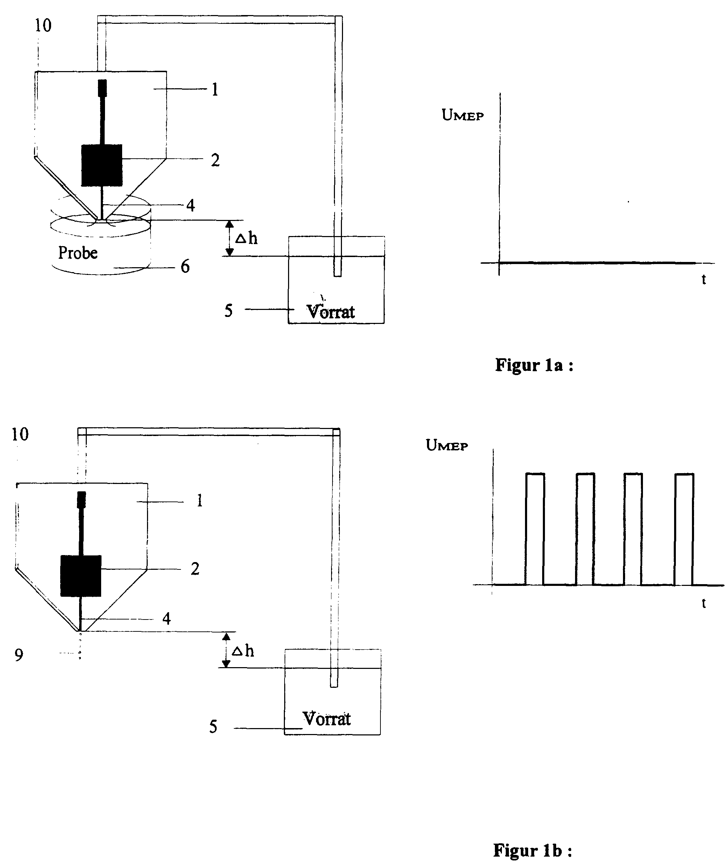

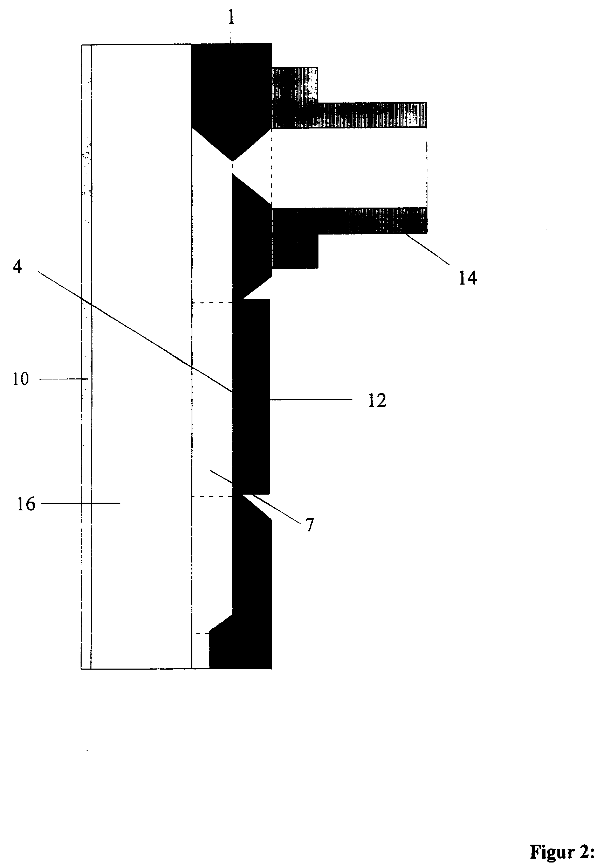

Das Hauptelement der Mikro-Pipette ist eine aus einem Silizium-Glas-Chip (1) aufgebaute, als Mikroejektionspumpe (MEP) betriebene Mikromembranpumpe (2), welche z.B. die Außenabmessungen L x B x H = 30 mm x 10 mm x 1,5 mm aufweist. Als Mikroejektionspumpe wird eine Mikromembranpumpe bezeichnet, welche generell am Ende eines Strömungskanals angeordnet ist, und das kontinuierliche Saugen von Fluiden im Piko- bis Mikroliterbereich gestattet. In Fig. 1 ist die Ansicht in den Momenten der Probenahme (a) bzw. Probeabgabe (b) dargestellt. Fig. 2 zeigt die Mikro-Pipette in einer Schnittdarstellung.
Grundsätzliche Voraussetzung für die Herstellung der Betriebsfähigkeit der als Mikropipette eingesetzten Mikroejektionspumpe ist die vollständige und blasenfreie Befüllung der Anordnung mit einem Fluid, z. B. einem in bezug auf die zu pipettierenden Fluide inerten Trägerfluid.
Für den weiteren Betrieb der Anordnung unterscheidet man nun zwei mögliche Betriebsfälle. In ersterem Fall wird die Anordnung nach der Befüllung mit dem Fluid aus einem Vorrat von diesem Vorrat wieder abgeklemmt, und kann nunmehr zeitlich begrenzt solange arbeiten, bis die Pumpkammer (7) der Mikroejektionspumpe (2) nicht mehr vollständig befüllt ist. Dieser Betriebsfall ist dann von Interesse, wenn eine möglichst vollständig miniaturisierte und kurzzeitig arbeitsfähige Mikropipettenanordnung gefordert ist. Die zu pipettierende Probe (6) kann dabei nur über den Vorgang der spontanen Injektion, gegen den der Anordnung innewohnenden hydrostatischen Druck aufgenommen, und über die Mikroejektionspumpe wieder dosiert abgegeben werden.
Im zweiten Betriebsfall wird die Anordnung nach der Befüllung mit dem inerten Fluid nicht vom Fluidvorrat (5) abgetrennt, sondem verbleibt zwecks kontinuierlicher Nachbefüllung in ständigem Kontakt mit diesem Vorrat.
In diesem Fall kann die Anordnung zeitlich unbegrezt zur Mikro-Pipettierung eingesetzt werden, wenn man davon ausgeht, daß auch der Füllstand im Vorrat (5) zeitweise nachgeregelt wird. Dieser Betriebsfall ist von Interesse, wenn die Anordnung in Systemen mit langen bzw. quasi endlosen Arbeitszyklen eingesetzt werden soll. Infolge der durchgehend blasenfreien Fluidfüllung der Anordnung von der als Pipettenspitze gestalteten Auslaufkapillare (4) über die Mikroejektionspumpe (2) und den Verbindungskanal mit dem Fluidvorrat (5), bildet sich im Bereich des Düsenmeniskus in Abhängigkeit von der Höhendifferenz Δh zwischen Fluidvorrat und Pipettenspitze ein positiver bzw. negativer Druckgradient aus.
Dieser Druckgradient stellt sich in jedem Fall unter Wirkung des hydrostatischen Drucks im System Vorrat-Kanal-Mikroejektionspumpe ein und ist nur für den Fall Null, daß die Höhendifferenz Δh ebenfalls gleich Null ist. Ist der Druckgradient ins Innere der Mikroejektionspumpe gerichtet und kommt es zur direkten Benetzung von Pipettenspitze (4) und Probe (6) an der Probeoberfläche, wird die zu pipettierende Probe (6) wiederum durch den Vorgang der spontanen Injektion in das Innere der Pumpkammer (7) aufgesogen. Dieser Vorgang ist durch die Eintauchzeit, durch das angebotene Probevolumen, die Geometrie aller Mikrokomponenten, die fluidischen Eigenschaften der Probe (6) und den Betrag des Druckgradienten im Unterschied zur erstgenannten Betriebsweise definierbar. Zur Einstellung definierter Benetzungsverhältnisse zwischen der Auslaufkapillare (4) und dem Probefluid (6) ist es außerdem erforderlich, die Eintauchfläche möglichst klein zu gestalten. Diese Bedingung wird erfindungsgemäß durch die vorzugsweise als Pyramidenspitze ausgeformte Auslaufkapillare (4) der Mikroejektionspumpe erfüllt.
Um die zeitlichen Verhältnisse des Eintauchvorganges definieren zu können, wurde erfindungsgemäß ein Eintauchsensor in Form eines metallischen Dünnfilmkontaktes (10) angebracht. Im Zusammenwirken dieser Gestaltungsprämissen ist es möglich, definierte Volumina im Nanoliterbereich aufzunehmen und im Piko- bis Nanoliterbereich abzugeben. Die Abgabe des aufgenommenen Probefluides erfolgt durch Anregung (U_{MEP}) des piezoelektrischen Aktors (12) auf der elastischen Kammerwand oder Membran (14). Der Probeausstoß erfolgt gemäß der Bauelementespezifik in volumendefinierten Mikrotropfen (9), deren Durchmesser 80 - 150 µm beträgt.

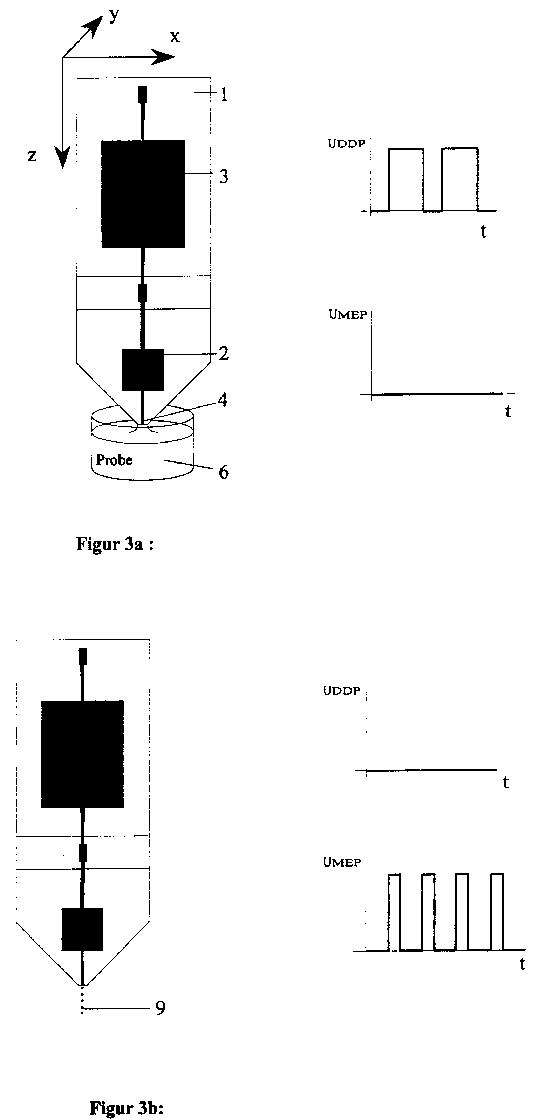

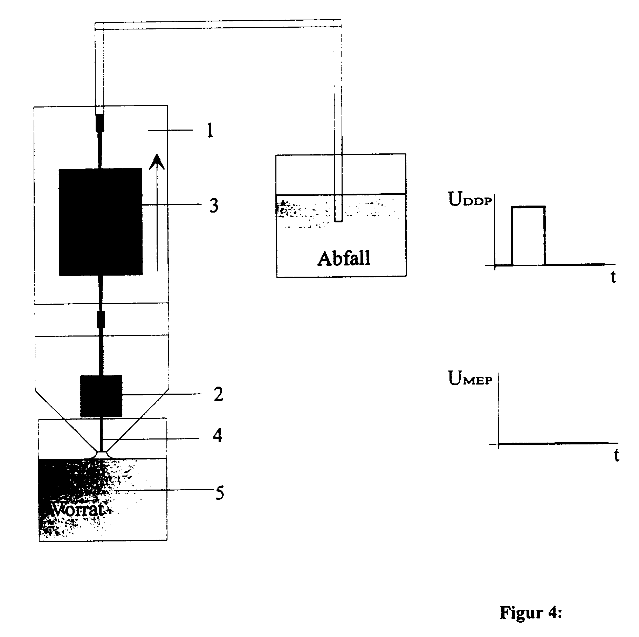

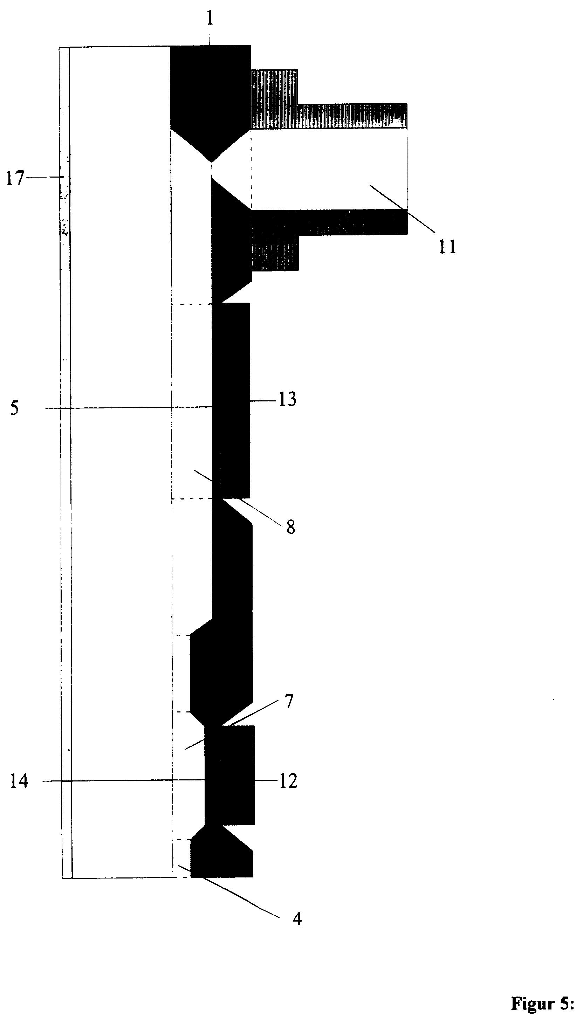

Um die Arbeitsweise der im Ausführungsbeispiel dargestellten Mikro-Pipette zu erläutern, ist eine separate Betrachtung der Vorgänge der Probenahme und der Probeabgabe nützlich.
Die Probenahme wird in den Figuren 1a und 3a beschrieben. Dabei wird die Pipettenspitze (4) der Mikroejektionspumpe (2) so in Kontakt mit der Probeflüssigkeit (6) gebracht, daß diese unter Bildung einer gekrümmten Oberfläche durch spontane Injektion und den wirkenden hydrostatischen Druck in das Innere der Mikroejektionspumpe (2) gesaugt wird.
Zur Aufnahme eines definierten Probevolumens kann dieser Vorgang durch den Betrieb der als Düse-Diffusor-Pumpe (DDP) aufgebauten Mikromembranpumpe (3), entsprechend Steuerspannungsdiagramm (U_{DDP}) unterstützt werden, indem die Düse-Diffusor-Pumpe zur Begrenzung der aufzunehmenden Probemenge als Mikrodruckpumpe oder zur Vergrößerung der aufzunehmenden Probemenge als Mikrosaugpumpe betrieben wird. Die Mikroejektionspumpe (2) wird während der Probeaufnahme entsprechend Steuerspannungsdiagramm (U_{MEP}) nicht aktiv betrieben.
Die Probeabgabe beschreiben die Figuren 1b und 3b. Hierbei wird die Mikroauslaufkapillare (4) auf die Ablageregion justiert, und nunmehr werden die Mikroejektionspumpe (2) entsprechend Steuerspannungsdiagramm (U_{MEP}) aktiv und die Düse-Diffusor-Pumpe (3) generell passiv (U_{DDP}) betrieben.
Zur Reinigung der Mikro-Pipette sowie zur Rückversetzung der Anordnung in den Ausgangszustand ist die Spülung der Mikro-Pipette mit einem inerten Spülfluid erforderlich. Für diesen Zweck kann die Mikro-Pipette über den Anschluß für den Fluidvorrat (14) mit einem Spülfluidvorrat oder einem Abfallbehälter verbunden werden. Wird die Mikro-Pipette entsprechend der Anordnung nach Figur 1 bzw. 2 gespült, arbeitet die Mikroejektionspumpe (2) als Saugpumpe am Ausgang der Anordnung und zieht Spülfluid aus einem Vorratsbehälter bis zur Erreichung des Ausgangszustandes durch die Mikroauslaufkapillare (4) in ein Abfallgefäß.
Die Spülung der Mikropipettenanordnung entsprechend der Figuren 3 bis 5 erfolgt vorteilhafterweise so, daß die als Saug-, Druck- oder Bidirektionalpumpe ausgelegte zweite Düse-Diffusor-Pumpe (3) bei inaktiver Mikroejektionspumpe (2) betrieben wird, und je nach Pumprichtung Spülfluid- bzw. Abfallgefäß am Anschluß (14) bzw. an der Pipettenspitze (4) angeordnet werden.

Die technologische Realisierung des Silizium-Glas-Verbundes (1) erfolgt durch Verwendung der mikrotechnischen Siliziumformgebung und die atomare Fügetechnik des Anodischen Bondens. Im ersten Präparationsprozeß, bestehend aus den Teilschritten thermische Oxidation, Fotolithografie und anisotropes Siliziumformätzen, wird ein zweiseitig strukturiertes Siliziumsubstrat (1) hergestellt. Dieses Siliziumsubstrat enthält danach die Strukturen einer Mikroejektionspumpe (2) mit Mikroauslaufkapillare (4), ggfs. einer zusätzlichen Mikromembranpumpe (3) sowie des diese Pumpen verbindenden Mikrokanalsystems mit Fluidanschluß (11). Das so strukturierte Siliziumsubstrat wird nach einer mehrstufigen Reinigung mit einer Pyrex-7740-Glasplatte (16) von 1 mm Dicke durch Anodisches Bonden zum Silizium-Glas-Verbund (1) gefügt, es entsteht das Kapillarsystem der Mikro-Pipette. Im Bereich der Pumpkammern (7) und (8) befinden sich je eine Siliziummembran (14) und (15), deren Dicke im Bereich von 50 - 190 µm liegt. Diese Siliziummembran wird durch je einen piezoelektrisch aktivierbaren Plattenaktuator (12), (13) lateral ausgelenkt, wobei die Dicke der eingesetzten Aktuatoren im Bereich von 100 - 260 µm ausgewählt wurde. Die Verbindung zwischen dem Fluidanschluß (1 1) der Mikro-Pipette und der Außenwelt kann z. B. mittels Silikon- oder PVC-Schlauchanschlußstücken realisiert werden. Für die Anpassung der mikrotechnisch gefertigten Mikropipette an eine Umgebung, die realen Pipettieraufgaben entspricht, wird das Bauelement an entsprechend geformten Haltevorrichtungen an ein x-y-z-Bewegungssystem angeschlossen. Damit ist die Bedienung von Zielsystemen mit mikrofluidischen Bauelementen effektiv möglich.
- 1: Silizium-Glas-Verbund, zweiseitig strukturiertes Glassubstrat
- 2: Mikromembranpumpe, MEP
- 3: zusätzliche Mikromembranpumpe, DDP
- 4: Mikroauslaufkapillare
- 5: Vorrat, auch Spülfluid
- 6: Probe, Probefluid
- 7: Pumpkammer MEP
- 8: Pumpkammer DDP
- 9: Mikrotropfen
- 10: metallischer Dünnfilmkontakt, Eintauchsensor
- 11: Fluidanschluß
- 12: piezoelektrischer Plattenaktuator MEP
- 13: piezoelektrischer Plattenaktuator DDP
- 14: Kammerwand oder Membran MEP
- 15: Kammerwand oder Membran DDP

- Δh: Höhendifferenz zwischen OK Vorrat und Pipettenspitze

## Patentansprüche

1. Elektrisch steuerbare Mikro-Pipette für Volumina im Bereich von einigen hundert pl bis zu einigen µl zum Pipettieren beliebiger flüssiger Proben mit oder ohne Mikropartikelanteilen, gekennzeichnet durch den Aufbau aus einer als Mikromembranpumpe ausgebildeten Mikroejektionspumpe (2), welche aus einer mikrotechnisch hergestellten Kammer (7) mit einer einen elektrisch ansteuerbaren Aktuator (12) aufweisenden elastischen Kammerwand (14) besteht, und einer als Pipettenspitze ausgebildeten Mikroauslaufkapillare (4), die mit der Kammer (7) verbunden ist.

2. Elektrisch steuerbare Mikro-Pipette nach Anspruch 1, gekennzeichnet dadurch, daß zur definierten Einstellung der zu pipettierenden Probevolumina zusätzlich an der Mikroejektionspumpe (2) eine zweite Mikromembranpumpe (3) angekoppelt ist, die als Mikrodruck- oder Mikrosaugpumpe ausgestaltet ist.

3. Elektrisch steuerbare Mikro-Pipette nach Anspruch 1, gekennzeichnet dadurch, daß die Probeaufnahme an der Öffnung der Mikroauslaufkapillare (4) durch spontane Injektion erfolgt und das aufgenommene Probevolumen durch die fertigungstechnisch frei wählbare Auslaufgeometrie der Mikroauslaufkapillare (4) und die Kontaktzeit zwischen flüssiger Probe (6) und der Mikroauslaufkapillare (4) definiert wird.

4. Elektrisch steuerbare Mikro-Pipette nach Anspruch 2, gekennzeichnet dadurch, daß die Probeaufnahme an der Öffnung der Mikroauslaufkapillare (4) über eine durch die Mikrosaug- bzw. Mikrodruckpumpe (3) erzeugte hydrostatische Druckdifferenz erfolgt, wobei die Mikroauslaufkapillare (4) als Drosselstelle wirkt und mit ihrem Querschnitt das pro Zeiteinheit einströmende Flüssigkeitsvolumen bestimmt wird.

5. Elektrisch steuerbare Mikro-Pipette nach Anspruch 1, gekennzeichnet dadurch, daß die Probeabgabe an der Öffnung der Mikroauslaufkapillare (4) durch Aktivieren der Mikroejektionspumpe (2) in Form einzeln zählbarer, gerichteter, impulsbehaftet beschleunigter und hinssichtlich ihres Tropfenvolumens definierter Tropfen (9) reproduzierbar durch die elektrischen Parameter der Mikropumpensteuerung im Bereich von 200 pl bis 3,5 nl einstellbar ist, wobei die Förderraten durch die Frequenz der Pumpenanregung (U_{MEP}) eingestellt werden.

6. Elektrisch steuerbare Mikro-Pipette nach Anspruch 1, gekennzeichnet dadurch, daß zusätzlich an der Mikroejektionspumpe (2) eine zweite, als Saug-, Druck- oder Bidirektionalpumpe ansteuerbare Mikromembranpumpe (3) zur Spülung der Anordnung angekoppelt ist.

7. Elektrisch steuerbare Mikro-Pipette nach Anspruch 1, gekennzeichnet dadurch, daß auf der Mikropipette bis zur Pipettenspitze (4) eine elektrisch aktive Kontaktmetallisierung (10) als Eintauchsensor für die Probeaufnahme angebracht ist.

## Claims

1. Electrically regulated micropipette for volumes ranging from a few hundred pl to several µl for pipetting all kinds of liquid samples with or without microparticles. The pipette is characterised by a microejection pump which was developed from a micromembrane pump (2) consisting of a chamber (7) manufactured using microtechnology with an electrical-driven actuator (12) an elastic chamber wall (14) and a microdischarge capillary (4) which forms the tip of the pipette and is linked to the chamber (7).

2. Electrically regulated micropipette in accordance with claim 1, characterised by the fact that to define the setting of the sample volume to be pipetted, a second micromembrane pump (3) which is designed as a double acting micropump is additionally connected to the microejection pump (2).

3. Electrically regulated micropipette in accordance with claim 1, characterised by the fact that the sample is taken up though the aperture of the microdischarge capillary (4) by way of spontaneous injection. The sample volume which is taken up is defined by the optional discharge geometry of the microdischarge capillary (4), depending on the manufacturing process and the contact period between the liquid sample (6) and the microdischarge capillary.

4. Electrically regulated micropipette in accordance with claim 2, characterised by the fact that the sample is taken up through the aperture of the microdischarge capillary (4) by the hydrostatic pressure difference which is created by the micro double action pump, whereby the microdischarge capillary (4) acts as a flow restrictor and its cross section determines the inflowing volume of liquid per unit of time.

5. Electrically regulated micropipette in accordance with claim 1, characterised by the fact that the sample is discharged through the aperture of the microdischarge capillary (4) by activating the microejection pump (2) in the form of a countable, regulated, impulse-accelerated drop (9) which is defined in terms of its drop volume and can be adjusted by the electrical parameters of the micropump control unit for a range of 200 pl to 3.5 µl, whereby the rate of delivery is adjusted by the pump activation frequency (U_{MEP}).

6. Electrically regulated micropipette in accordance with claim 1, characterised by the fact that a second controllable micro membrane pump (3) is additionally connected to the microejection pump (2) as a suction, pressure or bi-directional pump for rinsing the equipment.

7. Electrically regulated micropipette in accordance with claim 1, characterised by the fact that an electrically-active contact metallisation (10) has been affixed to the micropipette as far as the tip of the pipette (4) as an immersion sensor for taking up samples.

## Revendications

1. Micropipette à commande électrique pour des volumes dans une plage de quelques centaines de pl à quelques µl, pour pipetter n'importe quel type d'éprouvette liquide comprenant ou non des microparticules, caractérisée par la constitution formée d'une micropompe à éjection (2) conçue comme micropompe à membrane et se composant d'une chambre (7) fabriquée par technique microscopique avec une paroi de chambre élastique (14) comportant un actionneur (12) pouvant être amorcé électriquement et d'un microtube capillaire de sortie (4) conçu comme pointe de pipette et relié à la chambre (7).

2. Micropipette à commande électrique selon la spécification 1, caractérisée par le fait que, pour le réglage défini des volumes d'éprouvettes qui doivent être pipettés, une deuxième micropompe à membrane (3) conçue comme micropompe refoulante ou aspirante est couplée en plus à la micropompe à éjection (2).

3. Micropipette à commande électrique selon la spécification 1, caractérisée par le fait que le prélèvement de l'éprouvette à l'orifice du microtube capillaire de sortie (4) se fait par injection spontanée et que le volume de l'éprouvette prélevé est défini par la géométrie de la sortie du microtube capillaire de sortie (4), que l'on peut choisir librement avec la technique de fabrication, et par la durée du contact entre l'éprouvette liquide (6) et le microtube capillaire de sortie (4).

4. Micropipette à commande électrique selon la spécification 2, caractérisée par le fait que le prélèvement de l'éprouvette à l'orifice du microtube capillaire de sortie (4) se fait par une différence de pression hydrostatique provoquée par la micropompe aspirante ou refoulante (3), le microtube capillaire de sortie (4) agissant comme point d'étranglement et sa section déterminant le volume de liquide qui afflue par unité de temps.

5. Micropipette à commande électrique selon la spécification 1, caractérisée par le fait que la libération de l'éprouvette à l'orifice du microtube capillaire de sortie (4) est réglable dans la plage de 200 pl à 3,5 nl par l'activation de la micropompe à éjection (2), sous forme de gouttes (9) que l'on peut compter séparément, dirigées, accélérées par impulsions et définies quant à leur volume de gouttes, reproductible par les paramètres électriques de la commande de la micropompe, les débits de transport étant réglés par la fréquence de l'activation de la pompe (U_{MEP}).

6. Micropipette à commande électrique selon la spécification 1, caractérisée par le fait qu'une deuxième micropompe à membrane (3) pouvant être amorcée comme pompe aspirante, refoulante ou bidirectionnelle est couplée en plus à la micropompe à éjection (2) pour rincer l'installation.

7. Micropipette à commande électrique selon la spécification 1, caractérisée par le fait qu'une métallisation utilisée comme contact (10), active électriquement, est installée sur la micropipette jusqu'à la pointe de la pipette (4), en tant que détecteur par immersion pour le prélèvement d'éprouvettes.
